Europäisches Patentamt

European Patent Office

Office européen des brevets

(19)

(11) **EP 0 892 725 B1**

(12) **EUROPÄISCHE PATENTSCHRIFT**

(45) Veröffentlichungstag und Bekanntmachung des Hinweises auf die Patenterteilung:
**29.12.1999 Patentblatt 1999/52**

(21) Anmeldenummer: **97921777.5**

(22) Anmeldetag: **25.04.1997**

(51) Int. Cl.$^6$: **B60K 26/00**, F02B 77/08

(86) Internationale Anmeldenummer:
**PCT/EP97/02146**

(87) Internationale Veröffentlichungsnummer:
**WO 97/40997 (06.11.1997 Gazette 1997/47)**

(54) **EINRICHTUNG FÜR DEN ÖKONOMISCHEN BETRIEB VON KRAFTFAHRZEUGEN**

MOTOR VEHICLE ECONOMIC OPERATING SYSTEM

DISPOSITIF PERMETTANT DE FAIRE FONCTIONNER DES AUTOMOBILES DE MANIERE ECONOMIQUE

(84) Benannte Vertragsstaaten:
**AT BE CH DE DK ES FI FR GB GR IE IT LI LU MC NL PT SE**

(30) Priorität: **25.04.1996 DE 19616620**

(43) Veröffentlichungstag der Anmeldung:
**27.01.1999 Patentblatt 1999/04**

(73) Patentinhaber:
**AGENTUR DRöGE GMBH**
**63543 Neuberg (DE)**

(72) Erfinder: **DRÖGE, Bernhard**
**D-63543 Neuberg (DE)**

(74) Vertreter:
**Schickedanz, Willi, Dipl.-Ing.**
**Langener Strasse 68**
**63073 Offenbach (DE)**

(56) Entgegenhaltungen:
**DE-A- 2 926 024          DE-A- 3 023 481**
**DE-A- 4 427 330          US-A- 4 353 272**
**US-A- 4 505 368**

**Beschreibung**

Die Erfindung betrifft eine Einrichtung nach dem Oberbegriff des Patentanspruchs 1.

Die Automobilindustrie ist seit einigen Jahren in verstärktem Maße bestrebt, den Kraftstoffverbrauch ihrer Fahrzeuge zu verringern. Hierzu hat sie sich selbst Zielvorgaben gesetzt, die z. B. unter dem Schlagwort "3-Liter-Auto" bekanntgeworden sind. Unter einem "3-Liter-Auto" wird ein Auto verstanden, das bei normaler Fahrweise nicht mehr als drei Liter Kraftstoff, Benzin oder Dieselkraftstoff auf 100 Kilometer verbraucht.

Es ist bereits eine Vorrichtung zur Begrenzung des Kraftstoffverbrauchs bekannt, die einen Eingabeteil für den Sollwert eines kilometerbezogenen Kraftstoffverbrauchs besitzt, d. h. es kann z. B. der Sollwert 7 Liter pro 100 Kilometer eingegeben und in einem Speicher abgespeichert werden (DE-OS 27 19 209). Entsprechend dem eingestellten Sollwert werden eine im Kraftstoffweg angeordnete Kraftstoffdurchflußdrossel und eine im Luftansaugweg angeordnete Luftansaugdrossel eingestellt. Die beiden Drosseln werden folglich derart verstellt, daß sich stets der gleiche Kraftstoffverbrauch pro 100 Kilometer einstellt. Nachteilig ist bei dieser starren Kraftstoffverbrauchsvorgabe, daß z. B. auch dann die eingestellten 7 Liter pro 100 Kilometer verbraucht werden, wenn man mit einem geringeren Kraftstoffverbrauch auskäme. Der eingestellte Sollwert ist somit gleichzeitig Minimal- und Maximal-Wert.

Es ist weiterhin bekannt, bei elektrischen Motoren die momentane Leistung zu messen, die von Batterien abgegeben wird, und mit einem vorgegebenen Wert zu vergleichen (EP 0 610 682 A1). Wenn sich bei diesem Vergleich herausstellt, daß die momentane Leistung kleiner als eine vorgegebene maximale Leistung ist, wird auf die vorgegebene Leistung hinaufgeregelt. Ist die momentane Leistung jedoch größer als die vorgegebene maximale Leistung, wird auf die vorgegebene Leistung heruntergeregelt. Es wird also auch hier auf einen bestimmten Leistungswert geregelt. Im übrigen sind die Verhältnisse bei Elektromotoren insofern nicht mit den Verhältnissen bei Verbrennungsmotoren vergleichbar, als die Elektromotoren keine Gangschaltungen benötigen. Die Kraftstoffverbräuche sind indessen in den einzelnen Gängen verschieden.

Bei einer bekannten Einrichtung für die Kraftstoff-Luft-Gemischzumessung für eine Verbrennungskraftmaschine zur Regelung auf einen minimalen spezifischen Kraftstoffverbrauch ist es bekannt, die Drehzahl und das Kraftstoffzumeßsignal als Ist-Information heranzuziehen (DE-OS 34 03 394). Die Sollwerte können hierbei in Abhängigkeit vom eingelegten Getriebegang des mit der Brennkraftmaschine verbundenen Getriebes vorgegeben werden. Die Regelung auf minimalen Kraftstoffverbrauch bewirkt hierbei jedoch keine Begrenzung auf einen bestimmten Kraftstoff-Momentanverbrauch, sondern kann jeden vorgegebenen Wert überschreiten, wenn nur bei der abgegebenen Leistung der geringstmögliche Kraftstoffverbrauch eintritt. Eine Leistungsbegrenzung, die bei einer Kraftstoffzumessungsbegrenzung eintreten kann, soll hierbei nicht eintreten.

Es ist ferner eine Verbrauchsmeß- und Regeleinrichtung vorzugsweise für Dieselmotoren bekannt, die mindestens einen Durchflußzähler und ein Anzeigegerät aufweist (DE-OS 33 35 650). Bei dieser Einrichtung wird der Kraftstoffverbrauch gemessen und in Verbindung mit einem Bordcomputer der Durchschnittsverbrauch und/oder der Gesamtverbrauch pro Zeiteinheit angezeigt und bei Abweichung von vorgegebenen Werten der Verbrauch des Motors geregelt. Dadurch, daß eine zusätzliche Einflußnahme auf die Steuer- und Regeleinrichtung durch die Drehzahl des Motors vorgesehen ist (vgl. hierzu auch DE-OS 34 00 513), kann die Regelung durch Einflußgrößen vorgenommen werden, die mittels alleiniger Durchflußmessung nicht erzielbar ist. Die Drehzahl des Motors ist indessen kein geeignetes Kriterium, weil sie ohne zusätzliche Informationen nichts über den gerade eingelegten Gang aussagt.

Bei einer anderen bekannten Regeleinrichtung für eine Brennkraftmaschine kann neben der Kraftstoffmenge auch die Beschleunigung oder Verlangsamung gemessen werden (DE-OS 39 34 498). Steigungen können durch diese Messungen jedoch nicht ermittelt werden.

Für die Bestimmung oder Messung des momentanen Kraftstoffverbrauchs werden häufig Durchflußgeber verwendet. Es ist jedoch auch bekannt, die Verbrauchsdaten aus einem gespeicherten Kennfeld zu entnehmen, wobei die Verbrauchsdaten in Abhängigkeit von beschleunigungs- und/oder temperaturabhängigen Werten korrigiert werden (DE-OS 32 45 546).

Weiterhin sind Vorrichtungen bekannt, welche die Wirkung von Sparschaltungen oder -vorrichtungen bei Bedarf aufheben ("Kick-down", vgl. DE-OS 38 35 512).

Schließlich ist auch noch ein Verfahren zum Betrieb einer Brennkraftmaschine bekannt, die eine Kraftstoffzumeßeinrichtung aufweist, wobei im Leistungs-Drehzahl-Diagramm der Brennkraftmaschine eine Kurve ermittelt wird, welche die Punkte maximal zulässigen Kraftstoffverbrauchs bei verschiedenen Drehzahlen verbindet (DE-OS 29 26 024). Hierbei ist jedoch keine Meßanordnung vorgesehen, welche den Momentanverbrauch des Kraftstoffs direkt mißt. Vielmehr wird über andere Werte auf den Momentanverbrauch geschlossen. Außerdem ist eine Einrichtung zum Einstellen eines Schwellwerts für den momentanen Kraftstoffverbrauch vorgesehen. Hinzu kommt, daß zwar eine verbrauchsabhängige Umschaltung in einen anderen Gang stattfindet, aber nicht jedem Gang wenigstens ein Schwellwert des momentanen Kraftstoffverbrauchs zugeordnet ist.

Der Erfindung liegt deshalb die Aufgabe zugrunde, den momentanen Kraftstoffverbrauch bei Kraftfahrzeugen mit Verbrennungsmotor automatisch zu regeln, beispielsweise auf einen vorgegebenen Maximalwert.

Diese Aufgabe wird gemäß den Merkmalen des Patentanspruchs 1 gelöst.

Die Erfindung betrifft somit eine Einrichtung für den ökonomischen Betrieb von Kraftfahrzeugen mit Verbrennungskraftmaschinen und manuellen oder automatischen Schaltgetrieben. Für jeden Gang eines Schaltgetriebes sind ein oder mehrere Schwellwerte vorgebbar, bei deren Überschreiten eine Regelung eingreift und einen weiteren Anstieg des Kraftstoffverbrauchs verhindert. Indem jedem Gang wenigstens eine eigene Schwelle zugeordnet wird, läßt sich das Fahrverhalten des Kraftfahrzeugs an verschiedene Verkehrssituationen anpassen. Falls sinnvoll kann bei manchen Gängen auch auf die Einrichtung einer Schwelle verzichtet werden.

Der mit der Erfindung erzielte Vorteil besteht insbesondere in einer nicht unerheblichen Reduzierung des Kraftstoffverbrauchs. Dadurch, daß automatisch das Überschreiten eines vorgegebenen momentanen Kraftstoffverbrauchs verhindert wird, ist der Fahrer eines Kraftfahrzeugs von der kaum lösbaren Aufgabe befreit, sein Fahrverhalten nach dem momentanen Kraftstoffverbrauch auszurichten. Erfahrungsgemäß ist es außerdem schwierig, auf Dauer ein Gaspedal so zu betätigen, daß ein bestimmter Schwellwert eines Kraftstoff-Momentanverbrauchs nicht überschritten wird. Ein weiterer Vorteil der Erfindung ergibt sich dadurch, daß die automatische Regelung nur bei bestimmten Verhältnissen eingreift. So kann beispielsweise bei einem bestimmten Kraftfahrzeugtyp im ersten Gang bis Tempo 40 km/h der Verbrauch ungeregelt sein, während die Regelung im zweiten Gang zwischen den Grenzgeschwindigkeiten 40 km/h und 60 km/h einsetzt. Für den dritten Gang könnte die Regelung zwischen den Grenzgeschwindigkeiten 60 km/h und 80 km/h eingreifen, wohingegen beim vierten und fünften Gang die Regelung generell eingesetzt wird. Andere Grenzgeschwindigkeiten sind selbstverständlich möglich und wegen der verschiedenen Fahrzeugtypen sogar notwendig.

Ausführungsbeispiele der Erfindung sind in der Zeichnung dargestellt und werden im folgenden näher beschrieben. Es zeigen:

Fig. 1a      ein Beschleunigungs-Zeit-Diagramm;
Fig. 1b      ein Geschwindigkeits-Zeit-Diagramm;
Fig. 1c      ein Weg-Zeit-Diagramm;
Fig. 2      ein Meßgerät zur Anzeige des momentanen Treibstoffverbrauchs;
Fig. 3      eine Seitenansicht des Zeigers des Meßgeräts gemäß Fig. 2;
Fig. 4      eine Durchflußerfassung und -regelung;
Fig. 5a      einen Sensor-Reiter von einer ersten Seite;
Fig. 5b      den Sensor-Reiter der Fig. 5a von einer zweiten Seite, die gegenüber der ersten Seite um 90 Grad gedreht ist;
Fig. 6a      ein Steigungsmeßgerät in ebener Position;
Fig. 6b      ein Steigungsmeßgerät in schräger Position;
Fig. 7      eine Steigungsmessung über Satellitenfunk;
Fig. 8      eine graphische Darstellung einer möglichen Momentanverbrauchsregelung;
Fig. 9a - 9d      vier UND-Bedingungen für die Schwellwertregelung.

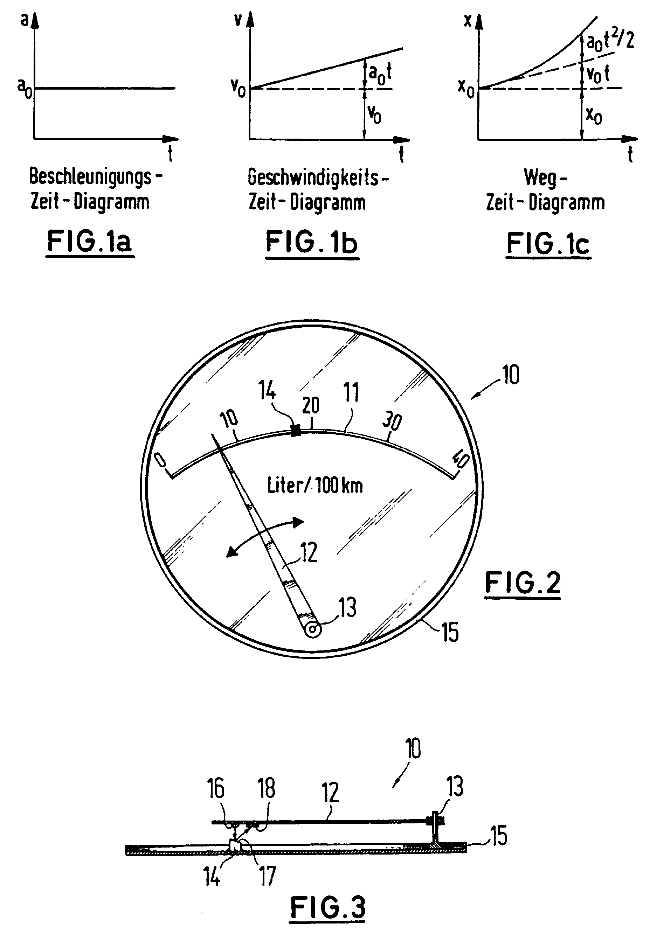

In den Fig. 1a bis 1c sind verschiedene Diagramme dargestellt, die den bekannten Zusammenhang zwischen Weg, Geschwindigkeit und Beschleunigung zeigen. In Fig. 1a ist eine Bewegung mit konstanter Beschleunigung dargestellt, d. h. ein Kraftfahrzeug wird gleichmäßig beschleunigt. Bei einer gleichmäßigen Beschleunigung nimmt die Geschwindigkeit linear zu, wie die Fig. 1b zeigt. Es gilt dann $v = v_0 + a_0 t$. Der Weg nimmt in diesem Fall nichtlinear, d. h. parabelförmig zu nach der Gleichung $x = x_0 + v_0 t + a_0 t^2/2$. Ist die Beschleunigung $a_0 = 0$, dann ist die Geschwindigkeit $v = v_0$, d. h. konstant, und der zurückgelegte Weg $x = v_0 t$. Diese letztgenannte Konstellation trifft z. B. bei einer Fahrt mit konstanter Geschwindigkeit über die Autobahn zu.

Während eines Beschleunigungsvorgangs, wie er durch die Diagramme der Fig. 1a bis 1c dargestellt ist, nimmt der Kraftstoffverbrauch nichtlinear - etwa nach Art der Fig. 1c - zu. Die Zunahme des Kraftstoffverbrauchs wächst noch erheblich schneller, wenn die Beschleunigung nicht konstant ist, wie in Fig. 1a gezeigt, sondern selbst zunimmt, etwa nach Art der Fig. 1b. Es ist Ziel der Erfindung, derart rasante Zunahmen im Kraftstoffverbrauch zu verhindern.

In der Fig. 2 ist die äußere Ansicht eines Meßgeräts 10 dargestellt, welches den momentanen Kraftstoff-Verbrauch anzeigt. Dieses Meßgerät weist eine Skala 11 auf, auf der die Werte 0, 10, 20, 30 und 40 aufgetragen sind, welche den Kraftstoffverbrauch in Liter pro 100 km anzeigen.

Ein Zeiger 12, der um einen Punkt 13 drehbar ist, zeigt gerade auf einen Verbrauch von ca. 7 Liter/100 Kilometer, d. h. wenn die aktuelle Fahrweise beibehalten wird, ist der Gesamtverbrauch an Treibstoff nach dem Zurücklegen einer Strecke von 100 km gleich 7 Liter. Wird bei dem in der Fig. 2 gezeigten Zustand stark beschleunigt, schlägt der Zeiger schnell nach rechts aus und kann leicht die 40-Liter-Marke erreichen.

Um den damit verbundenen hohen Energieverbrauch zu verhindern, kann eine Schwelle festgelegt werden, die nicht überschritten werden soll. Hierzu ist es z. B. möglich, die Skala 11 als Schiene auszulegen, auf der ein Reiter 14 aufgebracht werden kann. Dieser Reiter 14 ist an jeder beliebigen Stelle der Schiene anbringbar und markiert die jeweilige Schwelle.

Bei der in der Fig. 2 dargestellten Konstellation befindet sich der Reiter etwa bei 18 Litern/100 km, d. h. dieser Verbrauch soll nicht überschritten werden. In der Fig. 2 ist nur ein Reiter dargestellt. Es versteht sich jedoch, daß für jeden Gang wenigstens ein eigener Reiter vorgesehen sein kann.

Um das Überschreiten eines Schwellwerts zu erreichen, kann der Zeiger 12 auf seiner Unterseite einen Infrarotsender und einen Infrarot-Empfänger aufweisen, wobei dieser Sender bzw. Empfänger mit dem Reiter 14 zusammenwirkt.

In der Fig. 3 ist dies schematisch dargestellt. Innerhalb des Rands 15 des Meßgeräts 10 ist der Zeiger 12 über den Reiter 14 bewegbar. Hat der Zeiger 12 den Reiter 14 erreicht, so wird das Infrarotlicht einer lichtemittierenden Diode 16 auf eine verspiegelte Oberfläche 17 des Reiters 14 geworfen. Da diese Oberfläche 17 etwas geneigt ist, gelangt das reflektierte Licht auf den neben der Diode 16 angeordneten Lichtempfänger 18. Dieses vom Lichtempfänger 18 detektierte reflektierte Lichtsignal löst eine Meßerfassung der Zeigerstellung aus, d. h. es wird festgestellt, in welcher Position sich der Zeiger 12 beim Empfang des reflektierten Lichtsignals durch den Empfänger 18 befindet. Eine solche Positionserfassung ist mit an sich bekannten Mitteln möglich, z. B. bei Verwendung eines Inkrementalmotors für den Antrieb des Zeigers.

Hierbei wird die relative Winkelposition der Welle des Motors erfaßt, z. B. über optische Mittel. Die Position des Zeigers 12 kann auch mittelbar über den Strom ermittelt werden, der durch den elektrischen Antrieb des Zeigers 12 fließt.

Wesentlicher als die Erfassung der Position des Zeigers 12 ist allerdings, daß beim Empfang eines reflektierten Lichtsignals die Kraftstoffzufuhr gedrosselt oder eine sonstige Maßnahme eingeleitet wird, die den Kraftstoffverbrauch reduziert. Wird pro Gang jeweils ein Reiter verwendet, können die jeweiligen Reiter durch eine entsprechende Kodierung unterschieden werden. Diese Kodierung kann beispielsweise durch unterschiedliche Gestaltung der Reiter 14 oder der Sensoren 14, 18 erreicht werden.

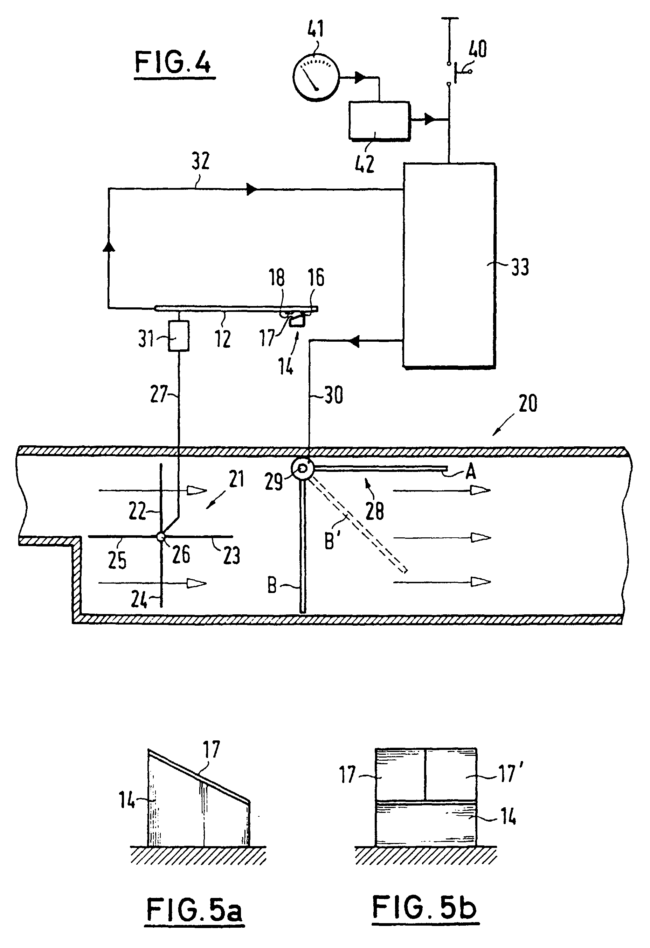

In der Fig. 4 ist schematisch dargestellt, wie eine erfindungsgemäße Schwellwert-Regelung im Prinzip durchgeführt werden kann. Auch hier wird der Einfachheit halber angenommen, daß nur ein Reiter vorgesehen ist. Mit 20 ist ein Teil einer Benzinzuführungsleitung bezeichnet, die zwischen einem nicht dargestellten Benzintank und einem nicht dargestellten Otto-Motor angeordnet ist. In dieser Benzinzuführungsleitung 20 befindet sich ein Flügelrad 21 mit Flügeln 22 bis 25, das sich z. B. bei durchströmendem Benzin im Uhrzeigersinn dreht. Die Rotationsgeschwindigkeit dieses Flügelrads wird z. B. durch einen kleinen Generator 26 erfaßt, dessen Rotor mit der Welle des Flügelrads verbunden ist.

Das von dem Generator 26 erzeugte elektrische Signal ist der Strömungsgeschwindigkeit des Benzins proportional und wird über eine elektrische Leitung 27 unter anderem einem Antrieb 31 des Zeigers 12 zugeführt. In der Zuführungsleitung 20 befindet sich außerdem eine Drosseiklappe 28, die mittels eines Antriebs 29 von einer Stellung A in eine Stellung B gebracht werden kann. Alle Zwischenstellungen zwischen A und B sind hierbei möglich. Der Antrieb 29 erhält seine Befehle über eine Leitung 30.

Überstreicht der Zeiger 12 mit seiner Infrarotdiode 16 den Reiter 14, so wird das durch den Empfänger 18 empfangene Lichtsignal in ein elektrisches Signal umgewandelt, das zur Regelung der Klappe 28 dient. Dieses Signal wird über eine Leitung 32 einer Regeleinheit 33 zugeführt, die ihrerseits über die Leitung 30 den Antrieb 31 der Klappe ansteuert. Die Klappe wird hierauf beispielsweise bei sehr hohem Momentanverbrauch schlagartig von der Position A in die Position B gebracht, so daß die gesamte Benzinzufuhr gesperrt ist. Hierauf dreht sich das Flügelrad 21 langsamer oder kommt ganz zum Stillstand, wodurch der Zeiger 12 aufgrund des Steuersignals auf der Leitung 27 in seine Ausgangslage - Position 0 in Fig. 2 - gebracht wird.

In der Praxis empfiehlt sich indessen eine abrupte Absperrung der Benzinzufuhr weniger, weil hierdurch das Kraftfahrzeug ruckartig langsamer fährt. Angenehmer ist es, wenn die Regelung sanft eingreift und den Zeiger 12 in einer Position knapp vor dem Reiter 14 hält.

Um dies zu erreichen, ist in der Regeleinrichtung 33 eine Schaltung vorgesehen, die bei Auftreten eines Signals auf der Leitung 32 die Klappe 28 nicht in die Stellung B, sondern in eine Zwischenstellung B' bringt, die etwa gestrichelt dargestellt ist. Der Übergang von der Position A zur Position B' erfolgt hierbei auch nicht abrupt, sondern allmählich, so daß auch die Strömung des Benzins nur allmählich abnimmt. Durch diese allmähliche Drosselung der Benzinzufuhr dreht sich auch das Flügelrad 21 stetig langsamer und bewegt somit den Zeiger 12 langsam wieder zurück. Überstreicht dieser Zeiger 12 immer wieder den Reiter - dieses Mal in der anderen Richtung -, so kann das hierbei entstehende Signal ausgenutzt werden, um die Klappe 28 in eine solche Position zu bringen bzw. zu halten, daß der Zeiger 12 knapp vor dem Reiter 14 zum Stehen kommt. Es versteht sich, daß statt des Kraftstoffzuflusses auch die Differenz zwischen Kraftstoffzufluß und Kraftstoffabfluß oder bei Einspritzmotoren die eingespritzte Kraftstoffmenge als Kriterium herangezogen werden kann.

In den Fig. 5a und 5b ist eine Ausgestaltung des Reiters 14 gezeigt, mit der es möglich ist, festzustellen, ob der Zeiger 12 von links oder von rechts den Reiter 14 überstreicht. Die Oberfläche des Reiters 14 ist hierbei in zwei Teilspiegel 17, 17' unterteilt, die leicht gegeneinander geneigt sind. Fällt das Licht auf den Teilspiegel 17', wird der Lichtstrahl anders abgelenkt, als wenn er auf den Teilspiegel 17 fällt. Durch den Einsatz von zwei verschiedenen und nebeneinander angeordneten Empfängern 18 kann somit festgestellt werden, von welcher Seite aus der Zeiger 12 den Reiter überstreicht.

Soll die automatische Durchflußregelung aufgehoben werden, kann der Fahrer ein Kickdown 40 oder andere Elemente betätigen. Durch diese Betätigung wird die Klappe 28 in ihre Stellung A zurückgebracht. Die Notwendigkeit, die Durchflußregelung zu deaktivieren, kann sich z. B. bei kritischen Überholmanövern ergeben, wo eine große Beschleunigung erforderlich wird. Sinkt der Momentanwert anschließend wieder auf einen Normalverbrauch bzw. auf den als Schwellwert eingestellten Verbrauch, so kann die Durchflußregelung automatisch wieder aktiviert werden.

Da es wenig Sinn macht, bereits beim Anfahren die Durchflußregelung zu aktivieren, kann bei einer Weiterbildung der Erfindung die Durchflußregelung erst ab einer bestimmten Fahrgeschwindigkeit zum Einsatz kommen. Dies ist in der Fig. 4 dadurch angedeutet, daß die von einem Tachometer 41 angezeigte Fahrgeschwindigkeit in ein elektrisches Signal umgewandelt und auf einen Schwellwerterkenner 42 gegeben wird. Erst dann, wenn eine vorgegebene Geschwindigkeitsschwelle überschritten ist, wird die Regeleinheit 33 aktiviert.

Der generelle Einsatz der Durchflußregelung unabhängig von den jeweiligen Umweltbedingungen kann zu unangemessenen Ergebnissen führen. Bei einer Weiterbildung der Erfindung wird deshalb zwischen einer Fahrt auf einer Ebene und einer Steigfahrt unterschieden.

Eine Bergauf-Fahrt erfordert stets einen höheren Treibstoffverbrauch als eine Fahrt auf ebener Strecke, so daß der Kraftstoff-Durchfluß an die veränderten Verhältnisse angepaßt werden muß.

Ist bei einer Fahrt auf ebener Strecke beispielsweise die Stellung B' der Klappe 28 angemessen, so bedeutet diese Position bei einer Bergfahrt eine zu starke Drosselung. Die Klappe sollte deshalb etwas weniger stark geschlossen werden.

Um eine entsprechende adaptive Regelung vornehmen zu können, wird die jeweilige Steigung ermittelt, die gerade genommen wird.

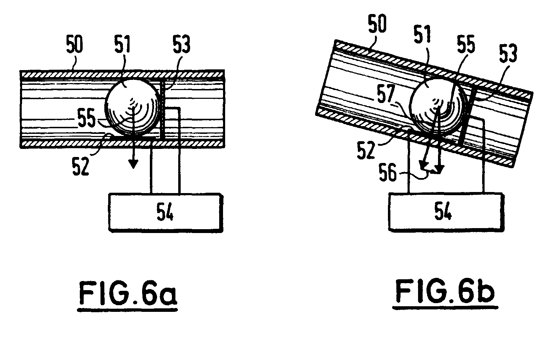

In den Fig. 6a und 6b ist eine Neigungsmeßvorrichtung dargestellt, mit der es möglich ist, die Steigungen zu messen, die ein Krafttahrzeug beispielsweise bei einer Bergfahrt nimmt.

In einem Rohr 50 befindet sich eine Kugel 51, die an einem unteren Drucksensor 52 und einem seitlichen Drucksensor 53 anliegt. Die von den Drucksensoren 52, 53 gemessenen Drücke werden einer Auswerteschaltung 54 zugeführt. Ein Pfeil oder Vektor 55 symbolisiert das Gewicht der Kugel 51.

Bei einer Fahrt auf ebener Strecke nimmt das Rohr 50 die in der Fig. 6a gezeigte waagrechte Position ein, während es bei einer Steigfahrt die in der Fig. 6b gezeigte Position einnimmt.

Im Idealfall erfaßt der Drucksensor 52 in der Position der Fig. 6a das gesamte Gewicht der Kugel 51; dagegen gibt der seitliche Sensor 53 praktisch ein Nullsignal ab, weil die Kugel 55 nicht auf ihn drückt.

In der Position gemäß Fig. 6b erfaßt jedoch der Sensor 53 einen Druck, der durch die horizontale Gewichtskomponente 56 der Kugel hervorgerufen wird. Der vom Sensor 52 erfaßte Druck ist dagegen geringer, weil die Gewichtskomponente 57 kleiner ist als das Gesamtgewicht 55 der Kugel 51.

Durch die unterschiedlichen Druckverhältnisse kann über die Auswerteeinrichtung 54 die jeweilige Steigung ermittelt werden.

Von besonderer Bedeutung ist hierbei die von dem Sensor 52 erfaßte Komponente, denn im Gegensatz zu der aufden Sensor 53 drückenden Komponente hängt sie nicht von der Beschleunigung des Kraftfahrzeugs ab. Dies ist wichtig, weil durch die Beschleunigung eine Kraft erzeugt wird, die sich der Gewichtskraft 56 überlagert.

Durch geeignete Berechnungsmaßnahmen ist es möglich, mit der Anordnung gemäß Fig. 6a, 6b nicht nur die Steigung zu ermitteln, sondern auch die Beschleunigung, weil sich die auf den Sensor 53 drückende Kraft aus einem Schwerkraftteil und einem Beschleunigungsteil zusammensetzt. Da schon allein aufgrund der vom Sensor 52 erfaßten Komponente die Steigung ermittelt werden kann, läßt sich die Beschleunigung durch Auswertung des mit dem Sensor 53 ermittelten Drucks errechnen.

Es versteht sich, daß in der Praxis besondere Maßnahmen getroffen werden müssen, um die Einflüsse von Bodenunebenheiten und dergleichen auf die an der Kugel 51 angreifenden Beschleunigungen zu eliminieren. Hierfür können an sich bekannte Integrationsmethoden oder statistische Verfahren eingesetzt werden.

Bei einer weiteren Ausgestaltung der Erfindung werden der Regeleinrichtung weitere Daten zugeführt, die bei der Maximalwert-Regelung berücksichtigt werden können oder müssen. Zu diesen Daten gehören beispielsweise spezielle Daten des Fahrzeugs und/oder des jeweiligen Motors. So kann es z. B. wichtig sein, das jeweilige Drehmoment oder die Drehzahl des Motors bei der Verbrauchsregelung zu berücksichtigen, damit ein Motor nicht "abgewürgt" wird.

Die erfindungsgemäße Regelung kann auch mit einer Getriebeautomatik, sofern vorhanden, zusammenwirken, so daß automatisch in die jeweils geeignetsten Gänge geschaltet wird.

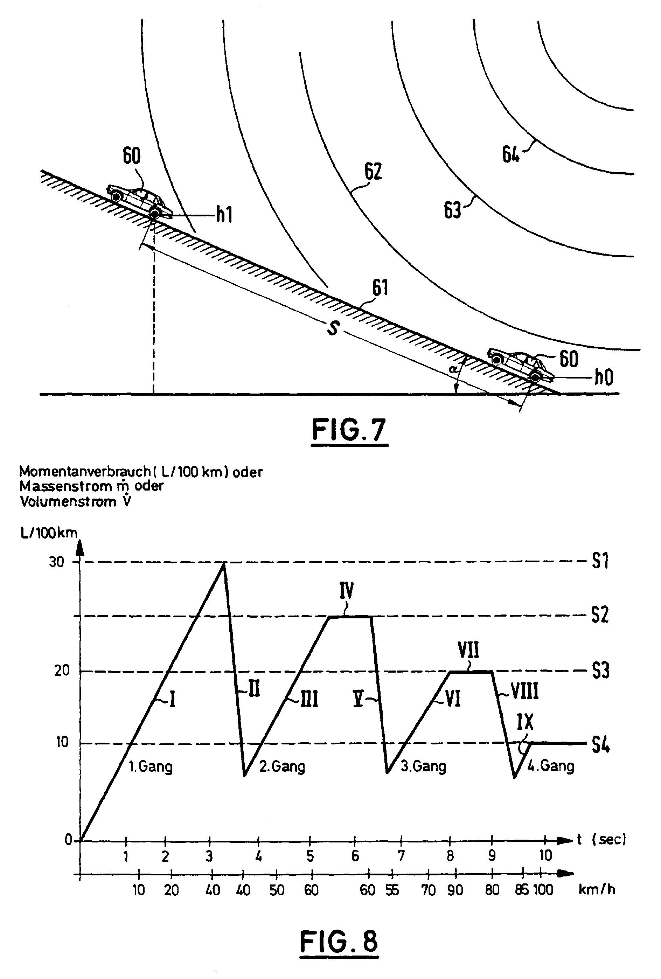

In der Fig. 7 ist eine andere Möglichkeit der Ermittlung von Steigungen dargestellt. Ein Kraftfahrzeug 60 befindet sich hierbei im Zeitpunkt $t_0$ auf einer Höhe $h_0$ und fährt anschließend eine schiefe Ebene 61 hinauf, um im Zeitpunkt $t_1$ die Höhe $h_1$ gewonnen zu haben.

Die Angaben über die Höhen $h_0$ und $h_1$ werden

dabei von einem Bordcomputer ermittelt, der Satellitendaten auswertet, wie es bei den Satelliten-Navigationssystemen üblich ist (vgl. z. B. DE-PS 34 26 851, DE-OS 41 23 097). Die Funksignale der Satelliten sind in der Fig. 7 mit 62 bis 64 bezeichnet. Die Strecke s kann - konstante Geschwindigkeit vorausgesetzt - über die Formel s = v · t = v (t₂ - t₁) ermittelt werden. Wird die Höhe h₁ - h₀ durch den Computer errechnet, so läßt sich die Steigung α über die Beziehung (h₁ - h₀) / s = sinα ermittelt. Mittels an sich bekannter Verfahren kann die Steigung auch dann ermittelt werden, wenn die Geschwindigkeit nicht konstant ist.

Geht man davon aus, daß einer bestimmten Kombination aus ruhiger Gaspedalstellung und eingelegtem Gang oder aus einer bestimmten Kombination aus Drehzahl und Geschwindigkeit auf ebener Strecke ein bestimmter Kraftstoffverbrauch zugeordnet ist ("normaler Verbrauch") oder hat man über einen Zeitraum stabile Verhältnisse festgestellt (ruhiges Gaspedal, konstante Geschwindigkeit und konstanter Verbrauch) und ändert sich dieser Kraftstoffverbrauch abrupt, so kann hieraus auf ein Gefälle, eine Steigung, eine Änderung des Reibungswiderstands oder eine Änderung der Windverhältnisse geschlossen werden. Dies kann entsprechende Änderungen bzw. Adaption der Maximal-Verbrauchs-Regelung sinnvoll machen.

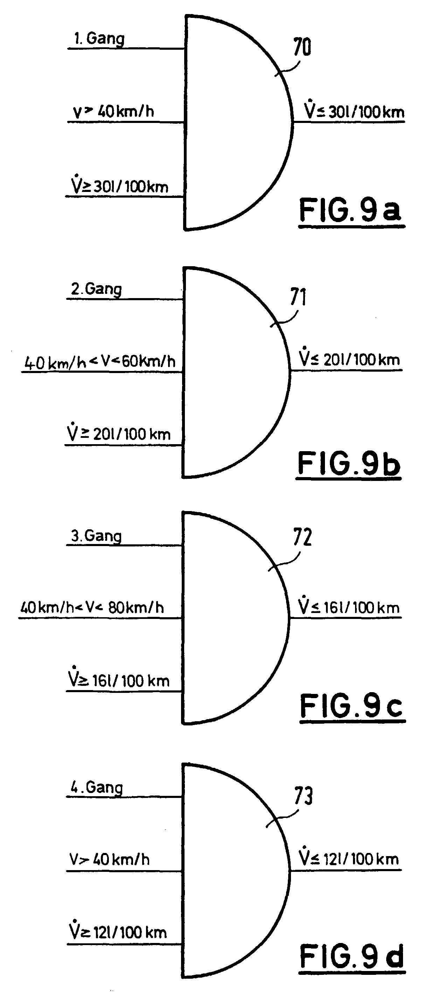

Die Fig. 8 zeigt eine graphische Darstellung einer möglichen erfindungsgemäßen Regelung. Hierbei ist der Kraftstoffdurcnfluß über der Zeit aufgetragen. Die Ordinate zeigt den momentanen Kraftstoffverbrauch in Liter/100 km und in ml/sec, während die Abszisse die Zeit t bzw. die Geschwindigkeit v darstellt.

Der Durchfluß einer Masse wird oft in Masse pro Zeiteinheit angegeben. Man spricht dann vom Massenstrom ṁ. Ist die Masse nicht oder kaum kompressibel, ist die Masse dem Volumen proportional und man spricht dann vom Volumenstrom V̇.

Flüssigkeiten und damit auch Benzin sind weitgehend inkompressibel, so daß man mit dem Volumenstrom rechnen kann. Die bei den üblichen Momentanverbrauchsanzeigen verwendete Einheit Liter/100 km wird deshalb gewählt, weil der Kraftstoffverbrauch von Kraftfahrzeugen normalerweise auf 100 km bezogen wird. Die Bezugnahme auf 100 km ist historisch bedingt und setzt eigentlich eine gleichbleibende Fahrweise voraus, z. B. eine konstante Geschwindigkeit auf einer Ebene. Es liegt jedoch auf der Hand, daß der Treibstoffverbrauch deutlich höher ist, wenn die 100 km mit einer konstanten Geschwindigkeit von 150 km/h durchfahren werden, als wenn sie mit einer konstanten Geschwindigkeit von 80 km/h durchfahren werden, weil der Luftwiderstand mit zunehmender Geschwindigkeit überproportional anwächst. Trägt man den Kraftstoffverbrauch pro 100 km über die Geschwindigkeit auf, so ergibt sich deshalb eine ansteigende Kurve.

Der Momentanverbrauch eines Kraftfahrzeugs hängt zwar auch von der Geschwindigkeit ab, aber nicht nur von dieser. Reibungswiderstände und Steigungen sind ebenfalls Einflußfaktoren.

Der Volumenstrom dV/dt = V̄ ist die Größe, die den eigentlichen Verbrauch charakterisiert. Soll dieser Momentanverbrauch auf 100 km hochgerechnet werden, muß die Geschwindigkeit bekannt sein. Wird z. B. ein Volumenstrom von 2 ml/sec bei einer Geschwindigkeit von 90 km/h = 25 m/sec gemessen, so folgt hieraus, daß das Kraftfahrzeug auf 25 m 2 ml Kraftstoff verbraucht. Bei konstant bleibendem Kraftstoffverbrauch würde dies bedeuten, daß das Kraftfahrzeug auf 100 km das 4000-fache (25 m x 4000 = 100 km), also 8 Liter (2 ml x 4000 = 8 Liter) verbrauchen würde.

Werden 2 ml/sec Volumenstrom bei einer Geschwindigkeit von 110 km/h = 30,55 m/sec ermittelt, so ergibt sich ein Verbrauch von 6,54 Liter pro 100 Kilometer. Der in ml/sec gemessene Volumenstrom V̇ und der in Liter/100 km gemessene Kraftstoff-Momentanverbrauch sind somit zueinander proportional.

Der Kraftstoff-Momentanverbrauch sagt indessen nur bedingt etwas darüber aus, ob eine Fahrweise ökonomisch ist, denn eine Geschwindigkeit von z. B. 50 km kann sowohl im zweiten als auch mi dritten Gang gefahren, konstant gehalten oder während überzogener Beschleunigung nur "durchfahren" werden, wobei jedoch der Kraftstoffverbrauch verschieden ist.

Welcher Gang gerade eingelegt ist, kann beispielsweise durch Sensoren erfaßt werden, welche die räumliche Stellung eines Schalthebels erkennen. Es ist aber auch möglich, den jeweils eingelegten Gang über die Motor-Drehzahl und die Geschwindigkeit zu ermitteln.

Legt der Kraftfahrer den ersten Gang ein und beschleunigt er das Fahrzeug, so steigt der Kraftstoffverbrauch rapide an, beispielsweise innerhalb von drei Sekunden auf 30 Liter/100 km wie es das Kurvenstück I in Fig. 8 zeigt. Streng genommen müßte der Kraftstoffverbrauch in der Fig. 8 als von Unendlich kommend dargestellt werden, weil bei v = 0 der Verbrauch unendlich ist. Durch die schematische Darstellung der Fig. 8 soll jedoch angedeutet werden, daß der Verbrauch bei zunehmender Beschleunigung auch im 1. Gang zunimmt. Kuppelt er nun und legt den zweiten Gang ein, fällt der Verbrauch zunächst ab (Kurvenstück II), um dann wieder anzusteigen (Kurvenstück III). Ist für den zweiten Gang ein maximaler Verbrauch von z. B. 25 Liter/100 km festgelegt, so kann der Momentanverbrauch die Schwelle S2 nicht übersteigen. Der Momentanverbrauch bleibt also konstant (Kurvenstück IV). Wird jetzt in den dritten Gang geschaltet, fällt beim Kuppeln zunächst der Verbrauch wieder ab (Kurvenstück V), um anschließend wieder anzusteigen (Kurvenstück VI). Als oberer Verbrauchswert ist für den dritten Gang S3 = 18 Liter/100 km festgelegt, so daß die Schwelle S3 nicht überschritten wird (Kurvenstück VII). Wird nun auf den vierten Gang umgeschaltet, fällt die Verbrauchskurve (Kurvenstück VIII) wieder ab, um anschließend erneut anzusteigen (Kurvenstück IX). Als Schwellwert für den vierten Gang gilt nun S4 = 12 Liter/100 km, so daß auch bei weiterem Gasgeben kein höherer Verbrauch als 12 Liter/100 km möglich ist.

Es versteht sich, daß die Darstellung der Fig. 8 grob vereinfachend ist, u. a. weil ein linearer Anstieg des Kraftstoffverbrauchs angenommen wurde. Außerdem ist bloß ein Schwellwert pro Gang dargestellt. Es ist jedoch möglich, pro Gang mehrere Schwellwerte vorzusehen, wobei die jeweiligen Schwellwerte etwa bestimmten Geschwindigkeiten zugeordnet sind.

Die Geschwindigkeit des Kraftfahrzeugs nimmt während des Anfahrprozesses zu. Sie ist jedoch nicht direkt proportional zur Zeit, sondern hängt beispielsweise so von der Zeit und dem momentanen Kraftstoffverbrauch ab, wie es die Abszisse unterhalb der t-Achse der Fig. 8 zeigt. Man kann die jeweiligen Geschwindigkeiten, wie bereits erwähnt, ebenfalls als Regelkriterium heranziehen und z. B. nur dann den Momentanverbrauch regeln, wenn bei einer bestimmten Geschwindigkeit ein bestimmter Schwellwert erreicht wird.

Indem das Überschreiten des für einen Gang eingestellten Schwellwerts erst ab einer bestimmten Geschwindigkeit verhindert wird, wird erreicht, daß das Kraftfahrzeug hinreichend Kraftstoffzufuhr beim Anfahren und Beschleunigen erhält.

Wie man aus der Fig. 8 erkennt, wird im ersten Gang bis 40 km/h gar keine Regelung vorgenommen. Im zweiten Gang wird ab 60 km/h geregelt, während im dritten Gang ab 70 km/h und im vierten Gang ab 105 km/h geregelt wird, da in diesem Beispiel der 1. Gang bis 40 km/h ungeregelt ist und im 2., 3. und 4. Gang bis zu den jeweils genannten Geschwindigkeiten der tatsächliche Verbrauch niedriger ist als der maximal erlaubte.

Der jeweils eingestellte Schwellwert kann auch adaptiv an verschiedene Einflußgrüßen angepaßt werden, beispielsweise an die Steigung oder das Gefälle einer Fahrbahn, an den Reibungswiderstand zwischen Fahrbahn und Reifen, an die Betriebstemperatur des Motors, an die räumliche Stellung des Gaspedals, an die Motordrehzahl, an den Winddruck oder an die Momentangeschwindigkeit.

In den Fig. 9a bis 9d sind Bedingungen, unter denen geregelt wird, noch einmal als UND-Bedingungen veranschaulicht. Nur wenn in den dargestellten Fällen jeweils drei Bedingungen erfüllt sind, wird auf eine vorgegebene Weise geregelt.

Beispielsweise wird gemäß Fig. 9a eine Verbrauchsregelung auf $\dot{V}$ = 30 l/100 km erst dann vorgenommen, wenn folgende Bedingungen am UND-Gatter 70 erfüllt sind: Der 1. Gang ist eingelegt, die Geschwindigkeit ist größer als 40 km/h und der Kraftstoffverbrauch hat 30 l/100 km erreicht. Die Tatsache, daß das Ausgangssignal des UND-Gatters der Fig. 9a mit einem Eingangssignal identisch ist, besagt lediglich, daß die Regelung auf den am Eingang erreichten Wert erfolgen soll. Es wäre selbstverständlich auch möglich, schon bei einem Eingangssignal von 28 l/100 km auf $\dot{V}$ = 30 l/100 km oder bei einem Eingangssignal von $\dot{V}$ = 30 l/100 km auf $\dot{V}$ = 32 l/100 km oder $\dot{V}$ = 28 l/100 km zu regeln. In diesen Fällen würden sich Eingangs- und Ausgangssignal unterscheiden. Es versteht sich, daß der 1. Gang mehreren Geschwindigkeiten und mehreren Schwellwerten zugeordnet werden kann.

Bei der Realisierung der Erfindung wird vorzugsweise keine feste mechanische Verbindung zwischen Gaspedal und Kraftstoffdrossel vorgesehen, sondern das Gaspedal hat lediglich die Funktion eines verstellbaren Potentiometers, der ein Stellglied betätigt, das seinerseits bei einem bestimmten Kraftstoffverbrauchsschwellwert aktiviert wird und einen Stellmotor betätigt, der eine Kraftstoffdrossel bewegt. Es ist auch möglich, neben einer Kraftstoffdrossel auch eine Luftzuführungsdrossel zu betätigen.

**Patentansprüche**

1. Einrichtung für den ökonomischen Betrieb von Kraftfahrzeugen mit Verbrennungsmotor und manuellem oder automatischem Schaltgetriebe, mit

   1.1 einer Meßeinrichtung (22 bis 25) zum Ermitteln des Momentanwerts des dem Motor zugeführten oder von dem Motor verbrauchten Kraftstoffs;
   1.2 einer Einrichtung (14) zum Einstellen eines Schwellwertes des besagten Momentanwerts;
   1.3 einer Regeleinrichtung (33), die das Überschreiten des eingestellten Schwellwerts verhindert,
   **dadurch gekennzeichnet**, daß jedem Gang des Schaltgetriebes ein oder mehrere eigene Schwellwerte (S1 bis S4) zugeordnet werden können.

2. Einrichtung nach Anspruch 1, **dadurch gekennzeichnet**, daß der jeweils eingelegte Gang durch Sensoren erfaßt wird, welche die Stellung eines Schalthebeis erkennen.

3. Einrichtung nach Anspruch 1, **dadurch gekennzeichnet**, daß der jeweils eingelegte Gang über die Kombination Drehzahl und Geschwindigkeit ermittelt wird.

4. Einrichtung nach Anspruch 1, **dadurch gekennzeichnet**, daß ein erster Schwellwert einer ersten Geschwindigkeit bei einem bestimmten eingelegten Gang zugeordnet ist, während ein zweiter Schwellwert einer zweiten Geschwindigkeit bei dem bestimmten eingelegten Gang zugeordnet wird usw.

5. Einrichtung nach Anspruch 1, **dadurch gekenn-**

**zeichnet**, daß das Überschreiten des für einen Gang eingestellten Schwellwerts erst ab einer bestimmten Geschwindigkeit verhindert wird.

6. Einrichtung nach Anspruch 1, **dadurch gekennzeichnet**, daß der Schwellwert adaptiv an Einflußgrößen gekoppelt ist.

7. Einrichtung nach Anspruch 6, **dadurch gekennzeichnet**, daß die Einflußgröße die negative oder positive Steigung einer Fahrbahn ist.

8. Einrichtung nach Anspruch 6, **dadurch gekennzeichnet**, daß die Einflußgröße der Reibungswiderstand zwischen Fahrbahn und Reifen ist.

9. Einrichtung nach Anspruch 6, **dadurch gekennzeichnet**, daß die Einflußgröße die Betriebstemperatur des Motors ist.

10. Einrichtung nach Anspruch 6, **dadurch gekennzeichnet**, daß die Einflußgröße die Stellung eines Gaspedals ist.

11. Einrichtung nach Anspruch 6, **dadurch gekennzeichnet**, daß die Einflußgröße die Motordrehzahl ist.

12. Einrichtung nach Anspruch 6, **dadurch gekennzeichnet**, daß die Einflußgröße die Momentangeschwindigkeit ist.

13. Einrichtung nach Anspruch 6, **dadurch gekennzeichnet**, daß die Einflußgröße der Winddruck ist.

14. Einrichtung nach den Ansprüchen 7, 8 oder 13, **dadurch gekennzeichnet**, daß als Indikator für Berg- oder Talfahrten, Änderungen des Reibungswiderstandes oder der Windverhältnisse die Abweichung des Kraftstoffverbrauchs von "Norm"- oder zuvor konstanten Momentanwerten und/oder die Gaspedalstellung und/oder die Geschwindigkeit und/oder die Drehzahl und/oder der Gang dient.

15. Einrichtung nach Anspruch 1, **dadurch gekennzeichnet**, daß eine vom Fahrzeugführer bedienbare Vorrichtung vorgesehen ist, mit der die Einrichtung außer Kraft gesetzt werden kann.

16. Einrichtung nach Anspruch 1, **dadurch gekennzeichnet**, daß der Schwellwert vom Fahrzeugführer einstellbar ist.

17. Einrichtung nach Anspruch 1, **dadurch gekennzeichnet**, daß die Regelung des Kraftstoffverbrauchs gedämpft erfolgt.

18. Einrichtung nach Anspruch 1, **dadurch gekenn-**

**zeichnet**, daß die Regelung ausgeschaltet wird, wenn der Kraftstoff-Momentanverbrauch extrem ansteigt.

19. Einrichtung nach Anspruch 7, **dadurch gekennzeichnet**, daß als Steigungsmeßgerät eine Kugel (51) vorgesehen ist, die an zwei Kraft- oder Druckmeßgeräten (52, 53) anliegt.

20. Einrichtung nach Anspruch 19, **dadurch gekennzeichnet**, daß die Kugel (51) in einem Rohr (50) angeordnet ist, das auf seiner Innenfläche ein erstes Druckmeßgerät (52) und senkrecht hierzu ein zweites Druckmeßgerät (53) aufweist.

21. Einrichtung nach Anspruch 7, **dadurch gekennzeichnet**, daß aus den von Satelliten ausgesandten Daten eine Höhendifferenz ermittelt und aus dieser Höhendifferenz die Steigung ermittelt wird.

22. Einrichtung nach Anspruch 16, **dadurch gekennzeichnet**, daß ein Zeigermeßgerät (10) vorgesehen ist, das eine Schiene (11) aufweist, auf der ein Reiter (14) aufgebracht ist, und daß ein über dem Reiter (14) bewegbarer Zeiger (12) mit einem Sensor (16, 18) zur Erfassung der Stellung des Reiters (14) vorgesehen ist.

**Claims**

1. A device for the economical operation of motor vehicles having an internal combustion engine and a manual or automatic transmission, having

    1.1 a measuring device (22 to 25) for determining the instantaneous value of the fuel which is fed to the engine or consumed by the engine,
    1.2 a device (14) for setting a threshold value of said instantaneous value,
    1.3 a closed-loop control device (33) which prevents the threshold value which has been set from being exceeded,
    characterized in that one or more separate threshold values (S1 to S4) can be assigned to each gear speed of the transmission.

2. The device as claimed in claim 1, characterized in that the respectively selected gear speed is sensed by sensors which detect the position of a transmission shifter.

3. The device as claimed in claim 1, characterized in that the respectively selected gear speed is determined by means of the combination of engine speed and velocity.

4. The device as claimed in claim 1, characterized in that a first threshold value is assigned to a first velocity for a specific, selected gear speed while a second threshold value is assigned to a second velocity for the specific, selected gear speed, etc.

5. The device as claimed in claim 1, characterized in that the upward transgression of the threshold value which has been set for a gear speed is prevented only above a specific velocity.

6. The device as claimed in claim 1, characterized in that the threshold value is adaptively linked to influencing variables.

7. The device as claimed in claim 6, characterized in that the influencing variable is the negative or positive gradient of a roadway.

8. The device as claimed in claim 6, characterized in that the influencing variable is the frictional resistance between roadway and tire.

9. The device as claimed in claim 6, characterized in that the influencing variable is the operating temperature of the engine.

10. The device as claimed in claim 6, characterized in that the influencing variable is the position of an accelerator pedal.

11. The device as claimed in claim 6, characterized in that the influencing variable is the engine speed.

12. The device as claimed in claim 6, characterized in that the influencing variable is the instantaneous velocity.

13. The device as claimed in claim 6, characterized in that the influencing variable is the wind pressure.

14. The device as claimed in claims 7, 8 or 13, characterized in that the deviation of the fuel consumption from "standard" or previously constant instantaneous values and/or the accelerator position and/or the velocity and/or the engine speed and/or the gear speed serve as indicators for traveling uphill or downhill, changes in the frictional resistance or the wind conditions.

15. The device as claimed in claim 1, characterized in that an apparatus which can be operated by the driver of the vehicle and with which the device can be disabled is provided.

16. The device as claimed in claim 1, characterized in that the threshold value can be set by the driver of the vehicle.

17. The device as claimed in claim 1, characterized in that the closed-loop control of the fuel consumption is effected in a damped fashion.

18. The device as claimed in claim 1, characterized in that the closed-loop control is switched off if the instantaneous consumption of fuel rises in an extreme fashion.

19. The device as claimed in claim 7, characterized in that a sphere (51) which bears against two force-measuring devices or pressure-measuring devices (52, 53) is provided as gradient measuring device.

20. The device as claimed in claim 19, characterized in that the sphere (51) is arranged in a pipe (50) which has a first pressure-measuring device (52) on its inner surface and a second pressure-measuring device (53) perpendicular thereto.

21. The device as claimed in claim 7, characterized in that an altitude difference is determined from the data transmitted by satellites and the gradient is determined from this altitude difference.

22. The device as claimed in claim 16, characterized in that a pointer measuring device (10) is provided which has a rail (11) on which a rider (14) is mounted, and in that a pointer (12) which can be moved by means of the rider (14) and has a sensor (16, 18) is provided for sensing the position of the rider (14).

**Revendications**

1. Dispositif pour le fonctionnement économique de véhicules automobiles comprenant un moteur à combustion et une boîte de vitesses à changement manuel ou automatique, comportant

    1.1 un dispositif de mesure (22 à 25) pour la détermination de la valeur momentanée de la consommation de carburant consommé par le moteur ou amené au moteur ;
    1.2 un dispositif (14) pour le réglage de la valeur seuil de ladite valeur momentanée ;
    1.3 un dispositif de réglage (33) qui doit empêcher le dépassement de la valeur seuil réglée, caractérisé en ce que une ou plusieurs valeurs seuils appropriées (S1 à S4) sont attribuées à chaque vitesse de la boîte.

2. Dispositif selon la revendication 1, caractérisé en ce que la vitesse respective engagée est détectée par des capteurs qui reconnaissent la position d'un levier de vitesse.

3. Dispositif selon la revendication 1, caractérisé en ce que la vitesse respective engagée est déterminée par l'association du nombre de tours et de la vitesse.

4. Dispositif selon la revendication 1, caractérisé en ce qu'une première valeur seuil est attribuée à une première vitesse pour une vitesse déterminée engagée, tandis qu'une seconde valeur seuil d'une seconde vitesse est attribuée à la vitesse respective engagée, etc.

5. Dispositif selon la revendication 1, caractérisé en ce que le dépassement de la valeur seuil réglée pour une vitesse n'est empêché qu'à partir d'une certaine vitesse.

6. Dispositif selon la revendication 1, caractérisé en ce que la valeur seuil est accouplée de manière adaptée à des facteurs d'influence.

7. Dispositif selon la revendication 6, caractérisé en ce que le facteur d'influence est la pente positive ou négative d'une chaussée.

8. Dispositif selon la revendication 6, caractérisé en ce que le facteur d'influence est la résistance de friction entre la chaussée et les pneus.

9. Dispositif selon la revendication 6, caractérisé en ce que le facteur d'influence est la température de fonctionnement du moteur.

10. Dispositif selon la revendication 6, caractérisé en ce que le facteur d'influence est la position d'une pédale d'accélérateur.

11. Dispositif selon la revendication 6, caractérisé en ce que le facteur d'influence est le nombre de tours du moteur.

12. Dispositif selon la revendication 6, caractérisé en ce que le facteur d'influence est la vitesse momentanée.

13. Dispositif selon la revendication 6, caractérisé en ce que le facteur d'influence est la pression du vent.

14. Dispositif selon l'une des revendications 7, 8 ou 13, caractérisé en ce que la différence de la consommation de carburant par rapport à la "norme" ou des valeurs momentanées constantes auparavant et/ou la position de la pédale d'accélérateur et/ou la vitesse et/ou le nombre de tours et/ou la vitesse engagée servent d'indicateur pour le trajet en descente ou en montée, les modifications de la résistance à la friction ou des conditions de vent.

15. Dispositif selon la revendication 1, caractérisé en ce qu'il est prévu un dispositif pouvant être utilisé par le conducteur du véhicule qui permet de mettre le dispositif hors service.

16. Dispositif selon la revendication 1, caractérisé en ce que la valeur seuil est réglable par le conducteur du véhicule.

17. Dispositif selon la revendication 1, caractérisé en ce que la régulation de la consommation de carburant est mise en veilleuse.

18. Dispositif selon la revendication 1, caractérisé en ce que la régulation est mise en route quand la consommation momentanée de carburant augmente de façon extrême.

19. Dispositif selon la revendication 7, caractérisé en ce qu'il est prévu une bille (51) comme instrument de mesure de la pente qui s'applique contre deux appareils de mesure de force ou de pression (52, 53).

20. Dispositif selon la revendication 19, caractérisé en ce que la bille (51) est disposée dans un tube (50) qui présente sur sa surface interne un premier appareil de mesure de pression (52) et perpendiculairement à cette dernière un second appareil de mesure de pression (53).

21. Dispositif selon la revendication 7, caractérisé en ce qu'à partir des données transmises par satellite, il est déterminé une différence de niveau et à partir de cette différence de niveau il est déterminé la pente.

22. Dispositif selon la revendication 16, caractérisé en ce qu'il est prévu un appareil de mesure à aiguilles (10) qui présente une glissière (11) sur laquelle est placé un cavalier (14) et en ce qu'il est prévu une aiguille (12) mobile sous l'action du cavalier (14) et munie d'un capteur (16, 18) pour la détection de la position du cavalier (14).

Beschleunigungs-
Zeit-Diagramm

**FIG.1a**

Geschwindigkeits-
Zeit-Diagramm

**FIG.1b**

Weg-
Zeit-Diagramm

**FIG.1c**

**FIG.2**

**FIG.3**

## FIG.4

## FIG.5a

## FIG.5b

FIG.6a

FIG.6b

**FIG.7**

Momentanverbrauch ( L/100 km) oder
Massenstrom ṁ oder
Volumenstrom V̇

**FIG. 8**

1. Gang

$\dot{V} \leq 30l/100km$

$v > 40 km/h$

$\dot{V} \geq 30l/100km$

70

**FIG. 9 a**

2. Gang

$\dot{V} \leq 20l/100km$

$40 km/h < V < 60 km/h$

$\dot{V} \geq 20l/100km$

71

**FIG. 9 b**

3. Gang

$\dot{V} \leq 16l/100km$

$40 km/h < V < 80 km/h$

$\dot{V} \geq 16l/100km$

72

**FIG. 9 c**

4. Gang

$\dot{V} \leq 12l/100km$

$V > 40 km/h$

$\dot{V} \geq 12l/100km$

73

**FIG. 9 d**